# EUROPÄISCHE PATENTANMELDUNG

(11) **EP 1 548 223 A2**
(43) Veröffentlichungstag der Anmeldung: **29.06.2005**
(21) Anmeldenummer: 04029927.3
(22) Anmeldetag: 17.12.2004
(51) Int. Cl.: E06B 7/00, E05D 15/24

(54) **Tor zum Verschliessen einer Toröffnung**

(30) Priorität: 23.12.2003 DE 10360759
(71) Anmelder: Decker, Wolfgang, 86441 Zusmarshausen-Wollbach (DE)
(72) Erfinder: Decker, Wolfgang, 86441 Zusmarshausen-Wollbach (DE)
(74) Vertreter: Munk, Ludwig, Dipl.-Ing.

(57) **Zusammenfassung**

Bei einem Tor zum Verschließen einer Toröffnung (3) einer für Nasszwecke eingerichteten Halle (2), insbesondere einer Fahrzeugwaschanlagenhalle, mit einem durch gelenkig miteinander verbundene Paneele (5) gebildeten, heb- und senkbaren Torblatt (4) und mit einer im Bereich des oberen Rands der Toröffnung (3) vorgesehenen, dem Torblatt (4) zugeordneten Tropfenauffangeinrichtung (7), lässt sich dadurch ein unerwünschtes Nachtropfen im Torbereich zuverlässig vermeiden, dass die Tropfenauffangeinrichtung (7) bei in seine obere Endstellung gebrachtem Torblatt (4) zumindest dessen unterstes Paneel mit seinem unteren Rand und seiner Gelenkverbindung (6) zum benachbarten Paneel (5) unterfasst.

## Beschreibung

Die Erfindung betrifft ein Tor zum Verschließen einer Toröffnung einer für Nasszwecke eingerichteten Halle, insbesondere einer Fahrzeugwaschanlagenhalle, mit einem durch gelenkig miteinander verbundene Paneele gebildeten, heb- und senkbaren Torblatt und mit einer im Bereich des oberen Rands der Toröffnung vorgesehenen, dem Torblatt zugeordneten Tropfenauffangeinrichtung, die vorzugsweise eine schwenkbar angeordnete Rinne enthält, die bei in seine obere Endstellung kommendem Torblatt in eine dessen unteren Rand unterfassende Position einschwenkbar und beim Absenken des Torblatts in seine Schließstellung aus dessen Vertikalebene herausschwenkbar ist.

Aufgrund geltender Auflagen müssen die vorhandenen Tore von Waschhallen, in denen Fahrzeugwaschanlagen aufgestellt sind, in der Regel während des Waschvorgangs geschlossen gehalten werden. Es kommt daher zu einer starken Tropfenbildungen auf der Innenseite des Torblatts. Dabei besteht die Gefahr, dass es im Torbereich zu einem Nachtropfen kommt und bei geöffnetem Tor vom angehobenen Torblatt abfallende Tropfen auf das gewaschene und getrocknete Fahrzeug niederfallen, insbesondere wenn dieses das Tor passiert. Dies ist unerwünscht, da derartige Tropfen auf dem Fahrzeug Flecken hinterlassen, sofern nicht nachgetrocknet wird.

Aus der DE 298 12 583 U1 ist eine Anordnung eingangs erwähnter Art mit einer schwenkbaren Rinne bekannt. Die hierbei vorgesehene, schwenkbar angeordnete Rinne ist jedoch so schmal, dass nur der untere Rand des untersten Paneels unterfasst werden kann. Hierbei wurde jedoch übersehen, dass mehr Wasser als vom unteren Rand vom Bereich des oberen Rands des untersten Paneels, insbesondere von dessen Gelenkverbindung zum nächsten Paneel abtropft. Die bekannte Anordnung erweist sich daher als nicht zuverlässig genug.

Hiervon ausgehend ist es daher die Aufgabe der vorliegenden Erfindung, eine Anordnung eingangs erwähnter Art mit einfachen und kostengünstigen Mitteln so zu verbessern, dass ein Nachtropfen im Torbereich zuverlässig vermieden wird.

Diese Aufgabe wird im Zusammenhang mit den gattungsgemäßen Maßnahmen dadurch gelöst, dass die Tropfenauffangeinrichtung bei in seine obere Endstellung gebrachtem Torblatt zumindest dessen unterstes Paneel mit seinem unteren Rand und seiner Anlenkung an das benachbarte Paneel unterfasst.

Diese Maßnahmen stellen sicher, dass nicht nur das vom unteren Rand des untersten Paneels, sondern insbesondere auch das von dessen Gelenkverbindung zum nächsten Paneel abtropfende Wasser zuverlässig aufgefangen wird. Hierdurch ist daher sichergestellt, dass keine unerwünschten Tropfen auf das gewaschene und getrocknete Fahrzeug niederfallen können.

Vorteilhafte Ausgestaltungen und zweckmäßige Fortbildungen der übergeordneten Maßnahmen sind in den Unteransprüchen angegeben.

So kann die Rinne der Tropfenauffangeinrichtung, die einfach als abgewinkeltes Blech ausgebildet sein kann, vorteilhaft einen nach innen verlängerten Schenkel aufweisen, der als bis unter die erste Gelenkverbindung reichendes Auffangschild ausgebildet ist. Mit Hilfe einer derartigen Rinne lassen sich in vorteilhafter Weise sowohl die vom Bereich des unteren Rands als auch vom Bereich des oberen Rands des untersten Paneels abfallenden Tropfen auffangen. Die Verwendung eines einfach abgewinkelten Blechs zur Bildung der Rinne ergibt eine besonders einfache und kostengünstige Bereitstellung.

Eine weitere vorteilhafte Maßnahme kann darin bestehen, dass die schwenkbare Rinne auf seitlichen Schwenkarmen aufgenommen ist und mit diesen einen Schwenkrahmen bildet, dessen Schwenkbewegung durch das Tor steuerbar ist.

Die Bildung eines Schwenkrahmens führt in vorteilhafter Weise zu einer hohen Stabilität und stellt gleichzeitig sicher, dass die erforderlichen Steuermittel zur Steuerung der Schwenkbewegung nur auf einer Seite benötigt werden. Es ergibt sich daher eine einfache und für robuste Anforderungen geeignete Anordnung.

In weiterer Fortbildung der übergeordneten Maßnahmen kann die Tropfenauffangeinrichtung zusätzlich oder alternativ zur Rinne eine der Innenseite des Torblatts zugeordnete Abdeckplane aufweisen, die auf eine im Bereich des oberen Rands der zugeordneten Toröffnung angeordnete Wickelwelle aufwickelbar und mittels des Torblatts hiervon abwickelbar ist. Die Abdeckplane bildet praktisch eine zweite Ebene unterhalb des in die Öffnungsstellung gebrachten Torblatts, wobei dieses im Falle einer Rinne über den inneren Rand der Rinne hinaus unterfasst werden kann, was einen besonders zuverlässigen Schutz gegen herabfallende Tropfen bietet. Die Anordnung der Abdeckplane kann in vorteilhafter Weise aber auch so sein, dass hier keine Rinne benötigt wird.

Bei gleichzeitiger Verwendung von Rinne und Abdeckplane ist zweckmäßig vorgesehen, dass sich die Abdeckbereiche des rinnenseitigen Auffangsschilds und der Abdeckplane überschneiden, so dass von der auf der Wickelwelle aufgenommenen Wicklung abtropfendes Wasser auf das Auffangschild der Rinne gelangt.

Eine weitere, besonders zu bevorzugende Fortbildung der übergeordneten Maßnahmen kann darin bestehen, dass innerhalb der Rinne eine Abstreifeinrichtung vorgesehen ist, die beim Hochfahren des Torblatts dessen Innenseite abstreift. Hierdurch wird sichergestellt, dass größere Tropfen abgestreift und/oder so fein verteilt werden, dass ihre Affinität zur Torblattoberseite größer als die an ihnen angreifende Schwerkraft ist.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine Fahrzeugwaschanlagenhalle mit der Ein- bzw. Ausfahröffnung zugeordnetem Sektionaltor mit in der Öffnungsstellung sich befindendem Torblatt mit zugeordneter Tropfenauffangrinne,
- Figur 2: die Anordnung gemäß Figur 1 mit zusätzlicher Abdeckplane und
- Figur 3: die Anordnung gemäß Figur 1 mit in die Schließstellung gebrachtem Torblatt mit dessen Innenseite zugeordnetem Abstreiforgan.

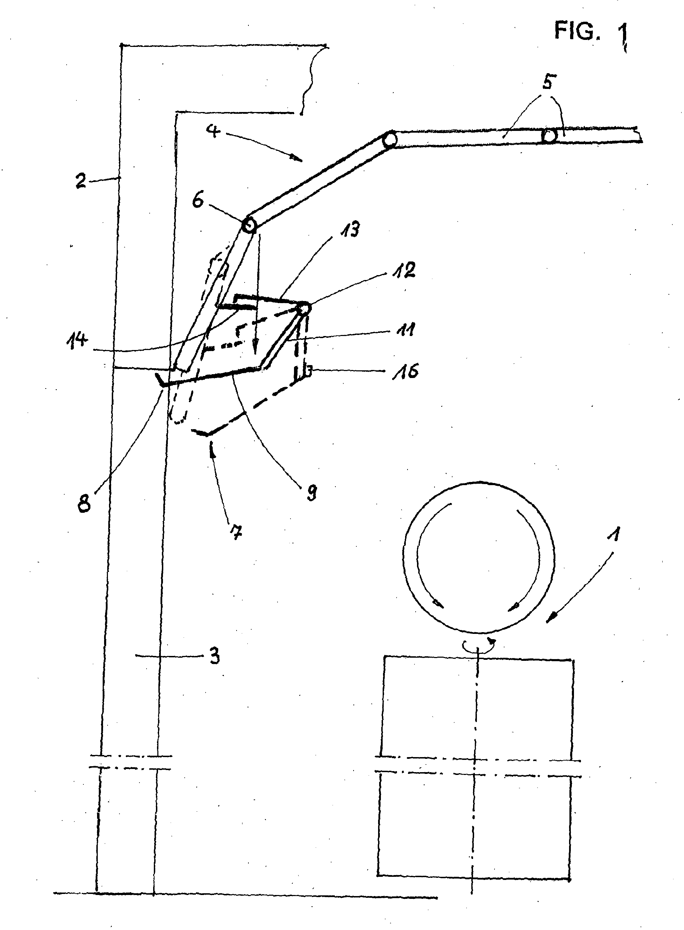

In Figur 1 ist eine Fahrzeugwaschanlage 1 schematisch angedeutet. Der Aufbau und die Wirkungsweise derartiger Anlagen sind an sich bekannt. Die Fahrzeugwaschanlage 1 befindet sich einer zugeordneten Halle 2, die mit einer Ein- bzw. Ausfahröffnung 3 versehen ist. Diese ist mittels eines Tors verschließbar. Tore dieser Art besitzen in der Regel ein durch gelenkig miteinander verbundene, horizontale Paneele gebildetes Torblatt 4. Den Figuren 1 - 3 liegt ein Sektionaltor mit gelenkig miteinander verbundenen Sektionaltorpaneelen 5 zugrunde.

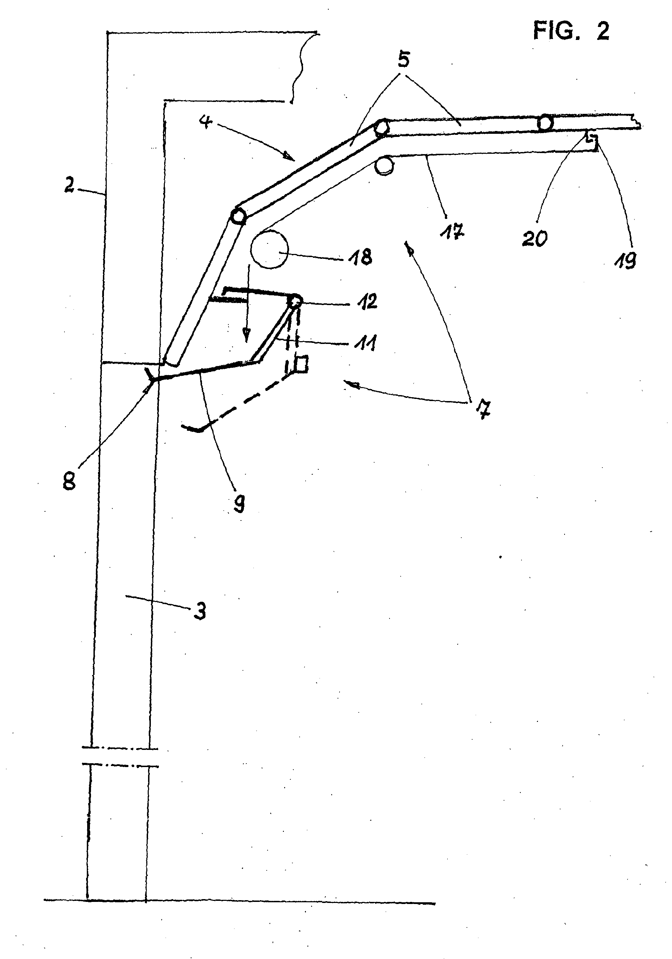

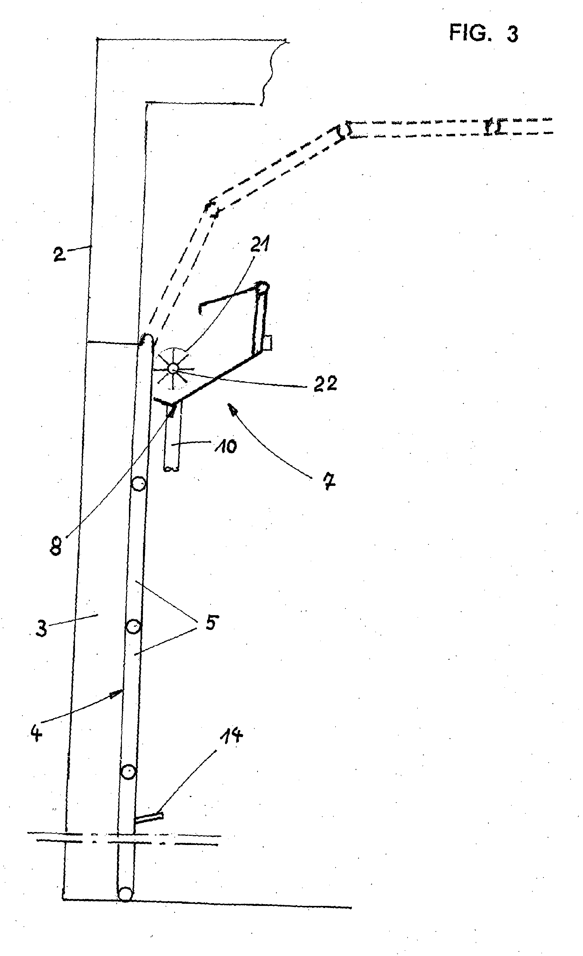

Das Torblatt 4 kann von einer den Figuren 1 und 2 zugrundeliegenden Öffnungsstellung, in welcher die Ein- bzw. Ausfahröffnung 3 freigegeben ist, in eine der Figur 3 zugrundeliegende Schließstellung gebracht werden, in welcher die Ein- bzw. Ausfahröffnung 3 verschlossen ist. In der Schließstellung befindet sich das Torblatt in einer vertikalen Schließstellung. In der Öffnungsstellung ist das Torblatt 4 angehoben, wobei die Paneele 5 weitgehend in eine horizontale, deckenparallele Lage umgelenkt sind. Lediglich der untere Bereich des Torblatts 4 inform des untersten Paneels 5 oder, wie im dargestellten Beispiel, der zwei untersten Paneele 5, ist nicht vollständig umgelenkt und verläuft vom oberen Randbereich der Ein- bzw. Ausfahröffnung 3 ausgehend etwa im Bogen nach oben.

Während eines Waschvorgangs befindet sich das Torblatt 4 in der Schließstellung. Dabei wird die Innenseite des Torblatts 4 zwangsläufig mit Wasser beaufschlagt, das nur teilweise abläuft. Der Rest bildet an der Innenseite des Torblatts haftende Wassertropfen, die herabfallen können, wenn das Torblatt 4 in seine Öffnungsstellung gebracht wird. Die Erfahrung hat gezeigt, dass sich dabei an den horizontalen, unteren und oberen Randbereichen insbesondere des untersten Paneels Abtropfkanten ergeben, an denen sich Wassertropfen bilden, die ab einer bestimmten Größe abtropfen. Der obere Randbereich umfasst dabei auch die Gelenkverbindung 6 zum jeweils benachbarten Paneel.

Um das Herabfallen unerwünschter Wassertropfen zu verhindern, ist eine Tropfenauffangeinrichtung 7 vorgesehen. Diese enthält im einfachsten, der Figur 1 zugrundeliegenden Fall eine schwenkbare Rinne 8, die bei in die Schließstellung kommendem Torblatt 4 in eine dessen unteren Rand unterfassende, in den Figuren 1 und 2 mit durchgezogenen Linien dargestellte Position einschwenkbar und beim Absenken des Torblatts 4 in seine Schließstellung aus dessen Vertikalebene herausschwenkbar ist, wie in den Figuren 1 und 2 mit unterbrochenen Linie angedeutet ist.

Die Rinne 8 kann einfach durch ein abgewinkeltes Blech gebildet werden, wobei dessen nach innen weisender Schenkel länger als der nach außen weisende Schenkel ist und bis unter die Gelenkverbindung 6 zwischen dem untersten Paneel und dem diesem benachbarten Paneel reicht. Der nach innen weisende Schenkel bildet dementsprechend ein den unteren Rand des Torblatts 4 sowie die unterste Gelenkverbindung 6 unterfassendes Auffangschild 9, das die von den im Bereich des unteren Rands als auch im Bereich des oberen Rands des untersten Paneels 5 sich ergebenden Abtropfkanten abtropfenden Tropfen auffangen kann, wie in Figur 1 durch einen Pfeil abgedeutet ist. Die Rinne 8 kann leichtes Gefälle nach einem Ende hin aufweisen und dort mit einem in Figur 3 angedeuteten Ablaufstutzen 10 versehen sein, an den ein beweglicher Schlauch angeschlossen sein kann.

Die schwenkbare Rinne 8 ist, wie die Figuren 1 - 3 erkennen lassen, auf seitlichen Schwenkarmen 11 aufgenommen, die ihrerseits mittels eines Schwenklagers 12 auf einem jeweils zugeordneten, gebäudeseitig festlegbaren, hier nicht näher dargestellten Lagerschild gelagert sein können. Zweckmäßig sind im Bereich beider Enden der Rinne 8 Schwenkarme 11 vorgesehen. Diese bilden zusammen mit der Rinne 8 einen stabilen Schwenkrahmen. Dieser kann mittels eines zugeordneten Antriebsmotors schwenkbar sein. Im dargestellten Beispiel wird der genannte Schwenkrahmen durch das Torblatt 4 in die den Figuren 1 und 2 zugrundeliegende Auffangstellung und durch die Schwerkraft in die der Figur 3 zugrundeliegende ausgeschwenkte Stellung bewegt, so dass auf einen Antriebsmotor mit zugeordneter Steuerung verzichtet werden kann.

Hierzu ist wenigstens einer der seitlichen, auf dem Schwenklager 10 aufgenommenen Schwenkhebel 11 als zweiarmiger Hebel ausgebildet, dessen zweiter, rinnenferner Arm als zum Torblatt 4 hin gerichteter Steuerarm 13 fungiert, der in der in Figur 1 mit unterbrochenen Linien angedeuteten Endphase der Hubbewegung des Torblatts 4 von diesem mitgenommen wird. Hierzu ist das Torblatt 4 im unteren Bereich seiner Innenseite, hier im Bereich der Innenseite des untersten Paneels 5 mit einem Mitnehmer 14 versehen, der mit dem freien Ende des Steuerarms 13 zum Eingriff kommt. Der Mitnehmer 14 kann als ebene oder nach oben konkav gebogene Lasche ausgebildet sein. Der Steuerarm 13 kann im Bereich seines freien Endes ein Tastorgan, etwa in Form einer Rolle etc. aufweisen. Ein Steuerarm 13 mit zugeordnetem Mitnehmer 14 genügen. Zweckmäßig können jedoch im Bereich beider Seiten des oben erwähnten Schwenkrahmens Steuerarme und diesen zugeordnete Mitnehmer vorgesehen sein.

Der genannte Schwenkrahmen ist so gelagert, dass er aufgrund der an ihm angreifenden Schwerkraft automatisch soweit zurückschwenkt, dass die Rinne 8 aus der Vertikalebene des Torblatts 1 herauskommt, sobald der Mitnehmer 14 mit dem Törblatt 4 in Richtung Schließstellung bewegt wird, wie in Figur 1 mit unterbrochenen Linien angedeutet ist. Diese Rückschwenkbewegung wird durch Anschläge 16 begrenzt, an denen der Schwenkrahmen mit den seitlichen Schwenkarmen 11 anläuft. Zur Bildung der Anschläge 16 können von den oben erwähnten Lagerschilden abstehende Stifte vorgesehen sein. In einfachen Fällen genügt ein seitlicher Anschlag 16. Zweckmäßig sind jedoch beiden Schwenkarmen 11 Anschläge 16 zugeordnet. Von den Anschlägen 16 wird der genannte Schwenkrahmen mit Hilfe des bzw. der Mitnehmer 14 entgegen der an ihm angreifenden Schwerkraft abgehoben, sobald der bzw. die Mitnehmer 14 zum Eingriff mit dem jeweils zugeordneten Steuerarm 13 kommen. Die Anordnung ist dabei so, dass eine Mitnahme erst in der Endphase der Hubbewegung des Torblatts 4 erfolgt und die Rinne 8 den unteren Rand des Torblatts gerade untergreift, wenn dieses seine oberste Stellung erreicht hat.

Eine andere Möglichkeit zur Bewegung und Steuerung des durch die Rinne 8 und die seitlichen Schwenkarme 11 gebildeten Schwenkrahmens könnte auch in der Verwendung einer Tastrolle bestehen, die unter der Wirkung wenigstens einer am Schwenkrahmen angreifenden Andrückfeder an der Innenseite des Torblatts 4 anliegt und die so auf der Innenseite des Torblatts 4 abrollt, dass sich die erwünschte Schwenkbewegung ergibt. Die Tastrolle ist dementsprechend so anzuordnen, dass sie bei heruntergelassenem Torblatt 4 an dessen Innenseite anliegt, wobei die Rinne 8 aus der Vertikalebene des Torblatts 4 herausgeschwenkt ist, und dass sie gegen Ende der Hubbewegung des Torblatts 4 auf dessen unteren Rand aufläuft, wobei die Rinne 8 in die Auffangstellung einschwenkt.

In den meisten Anwendungsfällen kommt die Tropfenauffangeinrichtung 7 mit einer Auffangrinne 8 oben beschriebener Art aus, wie in Figur 1 dargestellt ist. Bei dem der Figur 2 zugrundeliegenden Ausführungsbeispiel enthält die Tropfenauffangeinrichtung 7 zusätzlich zur Rinne 8 eine Abdeckplane 17, die bei angehobenen Torblatt 4 dessen Innenseite über die Rinne 8 hinaus ganz oder zumindest teilweise untergreift und dementsprechend eine zweite Ebene zum Auffangen von vom Torblatt 4 abfallenden Tropfen bildet. Die Abdeckplane 17 ist auf eine im Bereich oberhalb der Rinne 8 angeordnete Wickelwelle 18 aufwickelbar und mittels des Torblatts 4 hiervon abwickelbar. Hierzu kann die Abdeckplane 17 mit ihrem oberen Ende am oberen Ende des Torblatts 4 festgelegt sein. In einem derartigen Fall wird das Torblatt 4 in der Öffnungsstellung von der Tropfenauffangeinrichtung 7 bis zu seinem oberen Ende unterfasst. Vielfach genügt es jedoch, wenn der Auffangbereich der Rinne 8 durch die Abdeckplane 17 lediglich so verbreitert wird, dass alle nicht vollständig umgelenkten Paneele 5 und vorzugsweise noch das letzte, umgelenkte Paneel 5 unterfasst werden, wie in Figur 2 angedeutet. Hierbei ist die Abdeckplane 17 im Bereich ihres oberen Rands mit einem Mitnehmerorgan 19 versehen, das sich bei herabgelassenem Torblatt 4 in einer Wartestellung im dem Torblatt 4 zugewandten Umfangsbereich der auf der Wickelwelle 18 aufgenommenen Wicklung befindet und beim Hochfahren des Torblatts 4 zum Eingriff mit einem an diesem befestigten Gegenmitnehmerorgan 20 kommt.

Die Abdeckplane 20 kann zweckmäßig als dünne Kunststofffolie ausgebildet sein, so dass sich eine geringe Wickeldicke ergibt. Die Anordnung der Wickelwelle 18 ist zweckmäßig so, dass sich die Tropfenauffangbereiche des Auffangschilds 9 der Rinne 8 und der Abdeckplane 17 überschneiden, so dass von der auf der Wickelwelle 18 aufgenommenen Wicklung abfallende Tropfen auf das Auffangschild 9 gelangen, wie in Figur 2 durch einen Pfeil angedeutet ist.

Die Wickelwelle 18 kann zum Aufwickeln der Abdeckplane 17 mittels eines Motors oder über ein Reibradgetriebe vom Torblatt 4 angetrieben werden. Zweckmäßig ist die Wickelwelle 18 als Federwelle ausgebildet, die mit einer Torsionsfeder versehen ist, die beim Abwickeln der Abdeckplane 17 gespannt wird und diese beim Absenken des Torblatts 4 aufwickelt. Die Wickelwelle 18 kann wie der durch die Rinne 8 und die Schwenkarme 11 gebildete Schwenkrahmen auf seitlichen, gebäudeseitig vorgesehenen Lagerschilden gelagert sein. Es wäre aber auch denkbar, die Wickelwelle 18 mit Hilfe geeigneter Lagerböcke auf dem genannten Schwenkrahmen selbst aufzunehmen.

Bei der Ausführung gemäß Figur 2 ist die Abdeckplane 17 zusätzlich zur Rinne 8 vorgesehen. Eine Ausführung dieser Art ist bei Sektionaltoren, deren Torblatt in der Öffnungsstellung nicht vollständig horizontal ist, zweckmäßig. Bei Anordnungen mit einem vollständig in eine horizontale Position bringbarem Torblatt, wie sogenannten Deckenlauftoren, kommt die Tropfenauffangeinrichtung 7 nur mit einer Abdeckplane 17, das heißt ohne Rinne 8, aus.

Bei der Ausführung gemäß Figur 3 ist innerhalb der Rinne 8 eine Abstreifeinrichtung 21 vorgesehen, die beim Hochfahren des Torblatts 4 von der Schließstellung in die Öffnungsstellung dessen Innenseite abstreift und dabei anhaftendes Wasser zum Abtropfen bringt bzw. so fein verteilt, dass ein späteres Abtropfen erschwert wird, was die Sicherheit erhöht.

Die Abstreifeinrichtung 21 enthält ein an der Innenseite des Torblatts 4 zur Anlage kommendes Abstreiforgan. Dieses kann stationär angeordnet, das heißt auf seitlichen, gebäudeseitigen Lagerschilden oder mittels geeigneter Lagerböcke auf der Rinne 8 aufgenommen sein. Zur Bildung des Abstreiforgans kann eine Abstreiflippe oder -leiste vorgesehen sein. Im dargestellten Beispiel ist als Abstreiforgan eine drehbar angeordnete Bürstenwalze 22 vorgesehen. Diese ist zweckmäßig frei drehbar gelagert und so angeordnet, dass sie auf der Innenseite des Torblatts 4 abrollt. Eine Antriebseinrichtung ist hierbei nicht erforderlich. Es wäre aber auch denkbar, der Bürstenwalze 21 eine Antriebseinrichtung zuzuordnen.

## Patentansprüche

1. Tor zum Verschließen einer Toröffnung (3) einer für Nasszwecke eingerichteten Halle (2), insbesondere einer Fahrzeugwaschanlagenhalle, mit einem durch gelenkig miteinander verbundene Paneele (5) gebildeten, heb- und senkbaren Torblatt (4) und mit einer im Bereich des oberen Rands der Toröffnung (3) vorgesehenen, dem Torblatt (4) zugeordneten Tropfenauffangeinrichtung (7), die vorzugsweise eine schwenkbar angeordnete Rinne (8) enthält, die bei in seine obere Endstellung kommendem Torblatt (4) in eine dessen unteren Rand unterfassende Position einschwenkbar und beim Absenken des Torblatts (4) aus dessen Vertikalebene herausschwenkbar ist, **dadurch gekennzeichnet, dass** die Tropfenauffangeinrichtung (7) bei in seine obere Endstellung gebrachtem Torblatt (4) zumindest dessen unterstes Paneel (5) mit seinem unteren Rand und seiner Gelenkverbindung (6) zum benachbarten Paneel (5) unterfasst.

2. Tor nach Anspruch 1, **dadurch gekennzeichnet, dass** bei Verwendung der in der Tropfenauffangeinrichtung (7) enthaltenen Rinne (8) diese einen zumindest bis unter die unterste Gelenkverbindung (6) nach innen verlängerten, ein Auffangschild (9) bildenden Schenkel aufweist.

3. Tor nach Anspruch 2, **dadurch gekennzeichnet, dass** die Rinne (8) als abgewinkeltes Blech ausgebildet ist.

4. Tor nach Anspruch 2 oder 3, **dadurch gekennzeichnet, dass** die Rinne (8) wenigstens einen seitlichen Ablauf (10) aufweist.

5. Tor nach wenigstens einem der vorhergehenden Ansprüche 2 - 4, **dadurch gekennzeichnet, dass** die schwenkbare Rinne (8) auf seitlichen Schwenkarmen (11) aufgenommen ist und mit diesen einen Schwenkrahmen bildet, dessen Schwenkbewegung durch das Torblatt (4) steuerbar ist.

6. Tor nach einem der vorhergehenden Ansprüche 2 - 5, **dadurch gekennzeichnet, dass** wenigstens ein Schwenkarm (11) mit einem Steuerarm (13) verbunden ist, der in der Endphase der Hubbewegung des Torblatts (4) zum Eingriff mit einem an diesem angebrachten Mitnehmer (14) kommt und hierdurch entgegen einer Rückstellkraft so verschwenkbar ist, dass die Rinne (8) mit ihrem äußeren Bereich den unteren Rand des Torblatts (4) untergreift.

7. Tor nach Anspruch 6, **dadurch gekennzeichnet, dass** die Rückstellbewegung des Schwenkrahmens durch wenigstens einen festen Anschlag (16) begrenzt ist.

8. Tor nach wenigstens einem der vorhergehenden Ansprüche, **dadurch gekennzeichnet, dass** die Tropfenauffangeinrichtung (7) eine der Innenseite des Torblatts (4) zugeordnete Abdeckplane (17) aufweist, die auf eine im Bereich des oberen Rands der Ein- bzw. Ausfahröffnung (3) angeordnete Wickelwelle (18) aufwickelbar und mittels des Torblatts (4) hiervon abwickelbar ist.

9. Tor nach Anspruch 8, **dadurch gekennzeichnet, dass** die Wickelwelle (18) als mit einer Torsionsfeder versehene Federwelle ausgebildet sit.

10. Tor nach Anspruch 8 oder 9, **dadurch gekennzeichnet, dass** die Abdeckplane (17) an ihrem freien Ende mit einem Mitnehmerorgan (19) versehen ist, dem ein am Torblatt (4) angebrachtes Gegenmitnehmerorgan (20) zugeordnet ist.

11. Tor nach einem der vorhergehenden Ansprüche, **dadurch gekennzeichnet, dass** die Auffangeinrichtung (7) die Rinne (8) und die Abdeckplane (17) umfasst, wobei sich die Abdeckbereiche der Rinne (8) und der Abdeckplane (17) überschneiden.

12. Tor nach einem der vorhergehenden Ansprüche, **dadurch gekennzeichnet, dass** innerhalb der Rinne (8) eine Abstreifeinrichtung (21) vorgesehen ist, die beim Hochfahren des Torblatts (4) an dessen Innenseite anliegt.

13. Tor nach Anspruch 12, **dadurch gekennzeichnet, dass** die Abstreifeinrichtung (21) mit einer drehbar gelagerten Abstreifwalze (22) versehen ist.
